# EUROPEAN PATENT SPECIFICATION

(11) **EP 4 040 855 B1**
(45) Date of publication and mention of the grant of the patent: **12.02.2025**
(21) Application number: 21155803.6
(22) Date of filing: 08.02.2021
(51) Int. Cl.: H04L 67/14, H04W 28/02, H04W 76/12, H04W 40/02

(54) **INFLUENCING TRAFFIC ROUTING ON A PDU SESSION**
BEEINFLUSSUNG DER VERKEHRSLEITUNG IN EINER PDU-SITZUNG
INFLUENCES DE ROUTAGE DE TRAFIC SUR UNE SESSION PDU

(43) Date of publication of application: 10.08.2022
(73) Proprietor: Nokia Technologies Oy, 02610 Espoo (FI)
(72) Inventor: SINGH, Shubhranshu, 64342 Seeheim-Jugenheim (DE); THIEBAUT, Laurent, 92160 Antony (FR); HOFFMANN, Klaus, 80995 Munich (DE)
(74) Representative: Script Intellectual Property LLP

(56) References cited:
- US-A1- 2020 252 837
- "3rd Generation Partnership Project; Technical Specification Group Services and System Aspects; Study on enhancement of support for Edge Computing in 5G Core network (5GC) (Release 17)", no. V17.0.0, 17 December 2020 (2020-12-17), pages 1 - 250, XP051975180, Retrieved from the Internet <URL:https://ftp.3gpp.org/Specs/archive/23_series/23.748/23748-h00.zip 23748-h00.docx> [retrieved on 20201217]

## Description

### Field of the invention

The present disclosure relates to a influencing traffic routing on a PDU session.

### Abbreviations

- 3GPP: 3^{rd} Generation Partnership Project
- 4G / 5G / 6G: 4^{th} / 5^{th} / 6^{th} Generation
- 5GC: 5G CN
- AF: Application Function
- API: Application Programming Interface
- DN: Data Network
- DNAI: DN Access Identifier
- DNN: Data Network Name
- FQDN: Fully Qualified Domain Name
- GPSI: Generic Public Subscription Identifier
- ID: Identifier
- NEF: Network Exposure Function
- NF: Network Function
- NRF: Network Repository Function
- PCC: Policy and Charging Control
- PCF: Policy Control Function
- PDU: Protocol Data Unit
- PSA: PDU Session Anchor
- SMF: Session Management Function
- S-NSSAI: Single - Network Slice Selection Assistance Information
- TR: Technical Report
- TS: Technical Specification
- UDM: Unified Data Management
- UDR: Unified Data Repository
- UE: User Equipment
- UP: User Plane
- UPF: User Plane Function
- URI: Uniform Resource Identifier

### Background

3GPP SA2 has an ongoing study item specific to Edge Computing related problems and corresponding solutions as part of 3GPP Release-17. As part of this, several identified technical issues and solutions are accepted in 3GPP TR 23.748.

An application function (AF) may influence traffic routing on a PDU Session as defined in 3GPP TS 23.501, § 5.6.7, and in 3GPP TS 23.502, § 4.3.6. Namely, AF may use Nnef_TrafficInfluence_Create/Update messages providing traffic influence request information to 5GC. Thus, AF issues rules (via a NEF API) that may target one (or multiple) UE(s), a group of UEs identified by a Group ID, or any UE, as defined in 3GPP TS 29.522, Table 5.4.3.3.2-1. An excerpt of the table defining traffic influence request information is shown in Table 1. A traffic influence request information may be related to one PDU session or to plural PDU sessions (e.g. in case it is related to plural UEs).

**Table 1: Some elements of Traffic influence request information (excerpt from 3GPP TS 29.522, Table 5.4.3.3.2-1)**

| **Attribute name** | | **Data type** | **P** | **Cardinalit y** | **Description** | **Applicabili ty (NOTE 1)** |
|---|---|---|---|---|---|---|
| afServiceId | | string | O | 0..1 | Identifies a service on behalf of which the AF is issuing the request. | |
| afAppId | | string | O | 0..1 | Identifies an application. (NOTE 3) | |
| afTransId | | string | O | 0..1 | Identifies an NEF Northbound interface transaction, generated by the AF. | |
| appReloInd | | boolean | O | 0..1 | Identifies whether an application can be relocated once a location of the application has been selected. Set to "true" if it can be relocated; otherwise set to "false". Default value is "false" if omitted. | |
| dnn | | Dnn | O | 0..1 | Identifies a DNN, a full DNN with both the Network Identifier and Operator Identifier, or a DNN with the Network Identifier only. | |
| snssai | | Snssai | O | 0..1 | Identifies an S-NSSAI. | |
| externalGroupId | | ExternalGroupI d | O | 0..1 | Identifies a group of users. | |
| | | | | | (NOTE 2) | |
| anyUeInd | | boolean | O | 0..1 | Identifies whether the AF request applies to any UE (i.e. all UEs). This attribute shall set to "true" if applicable for any UE, otherwise, set to "false". | |
| | | | | | (NOTE 2) | |
| subscribedEvents | | array(Subscribe dEvent) | O | 1..N | Identifies the requirement to be notified of the event(s). | |
| gpsi | | Gpsi | O | 0..1 | Identifies a user. | |
| | | | | | (NOTE 2) | |
| NOTE 1: | Properties marked with a feature as defined in subclause 5.4.4 are applicable as described in subclause 5.2.7 of 3GPP TS 29.122 [4]. If no feature is indicated, the related property applies for all the features. | | | | | |
| NOTE 2: | One of individual UE identifier (i.e. "gpsi", "ipv4Addr" or "ipv6Addr"), External Group Identifier (i.e. "externalGroupId") or any UE indication "anyUeInd" shall be included. | | | | | |
| NOTE 3: | One of "afAppId", "trafficFilters" or "ethTrafficFilters" shall be included. | | | | | |

Further cited prior art documents are 3GPP TR23.748 V17.0.0 and US 2020/252837 A1 showing a method for checking change in wireless connection type terminal in third-party application server.

### Summary

It is an object of the present invention to improve the prior art.

According to aspects of the invention, there are provided apparatuses and methods according to the respective claims.

According to some embodiments of the invention, at least one of the following advantages may be achieved:
- consistent handling if plural AFs influence a PDU session;
- network operator keeps control on PDU session even if an external AF attempts to influence the PDU session.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of some implementations of the present invention which is to be taken in conjunction with the appended drawings, wherein:
Fig. 1 shows a message flow according to some arrangements;
Fig. 2 shows a message flow according to some arrangements;
Fig. 3 shows an apparatus according to an example arrangement;
Fig. 4 shows a method according to an example arrangement;
Fig. 5 shows an apparatus according to an example arrangement;
Fig. 6 shows a method according to an example arrangement; and
Fig. 7 shows an apparatus according to an example arrangement;

### Detailed description of arrangements

Herein below, certain arrangementsare described in detail with reference to the accompanying drawings, wherein the features of the implementationscan be freely combined with each other unless otherwise described. However, it is to be expressly understood that the description of certain arrangementsis given by way of example only, and that it is by no way intended to be understood as limiting the invention to the disclosed details.

Moreover, it is to be understood that the apparatus is configured to perform the corresponding method, although in some cases only the apparatus or only the method are described.

Some of the solutions accepted in 3GPP TR 23.748, e.g. solution 55, assume deployment scenarios where more than one Application Function provides input (i.e., a traffic influence request information, which may have a format as shown in Table 1 as an example) to SMF via PCF to influence traffic routing, PSA selection etc. and where the input of these multiple AFs may target the same PDU Session and possibly the same application traffic within that PDU Session. Also, in Release-16 specification e.g. 3GPP TS 23.502, there are some procedures defined that require multiple AFs.

If an AF (e.g. a source AF) provides input to SMF via PCF to influence traffic routing and subsequently (an)other AF(s) (e.g. a target AF) provides input to SMF via PCF in order to influence traffic routing for the same application traffic, it is not specified how the following example use cases are addressed:
The "source" AF provides via PCF to SMF information (i.e. a request) to influence SMF routing decisions for traffic of PDU Sessions for "any UE", and another AF (e.g. a target AF) also provides a request to influence SMF routing decision for an "externalgroupID" (certain UEs may belong to group/any UE). Additionally, or subsequently, another AF (e.g. another target AF) provides information for a particular UE to influence SMF routing decisions for the same traffic of the PDU Session targeted by the request of the source AF.

That is, the following example questions are not yet answered:
- Does PCF update earlier information in order to provide corresponding PCC rules to SMF?
- If so, how does PCF update the earlier information?
- How PCF can decide which AF inputs (i.e. input from source AF, target AF-1, target AF-2, ..) to consider for updating PCC rules?
- Does the target (e.g. "any UE" or a specific UE ) have any influence on the decision?
- How to handle such requests if the AF is deployed by third party which is not a trusted party? In this case, the AF provides its input to 5GC via NEF. (If the AF is trusted, it may provide the request via NEF, too, or it may provide it directly to PCF, in particular if it is directed to a single UE only).

Some example arrangements provide a solution to these questions. Namely, some example arrangements provide a new functionality at NEF, UDR, PCF, and/or AF, along with corresponding procedures enhancements. They allow deployment scenarios with multiple AFs influencing traffic routing on a PDU session. For example, source AF may provide input to PCF to influence traffic routing, and subsequently another AF(s) (e.g. target AF) provides input to SMF via PCF in order to influence traffic routing for the same application traffic. As another example, plural AFs may provide substantially simultaneously (i.e., the PCF receives the second input before the PCF instructs SMF with new PCC rules based on the first input) input to SMF via PCF to influence the traffic routing. With the procedure enhancements, along with a new priority indication, PCF may (or may not) update PCC rules and provide them to SMF for traffic routing based on the input from an appropriate AF. The same applies correspondingly to any other user plane management purposes and notification services for the PDU session.

Some example arrangements provide a priority indication along with the traffic influence request information. Depending on the implementation or configuration, the traffic influence request information may comprise the priority indication as an additional element ("prioritized traffic influence request information"), or the priority indication is provided in a separate information element.

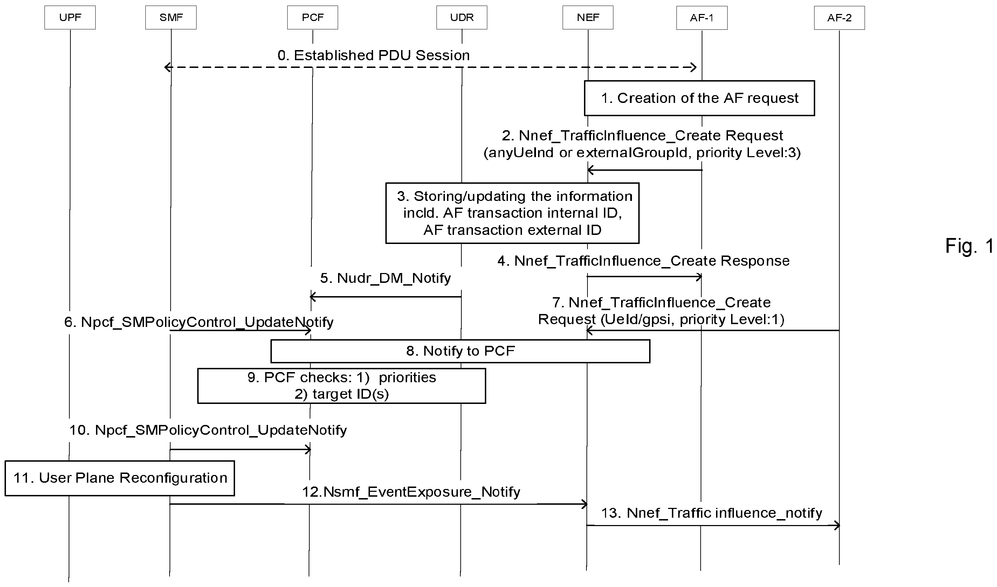

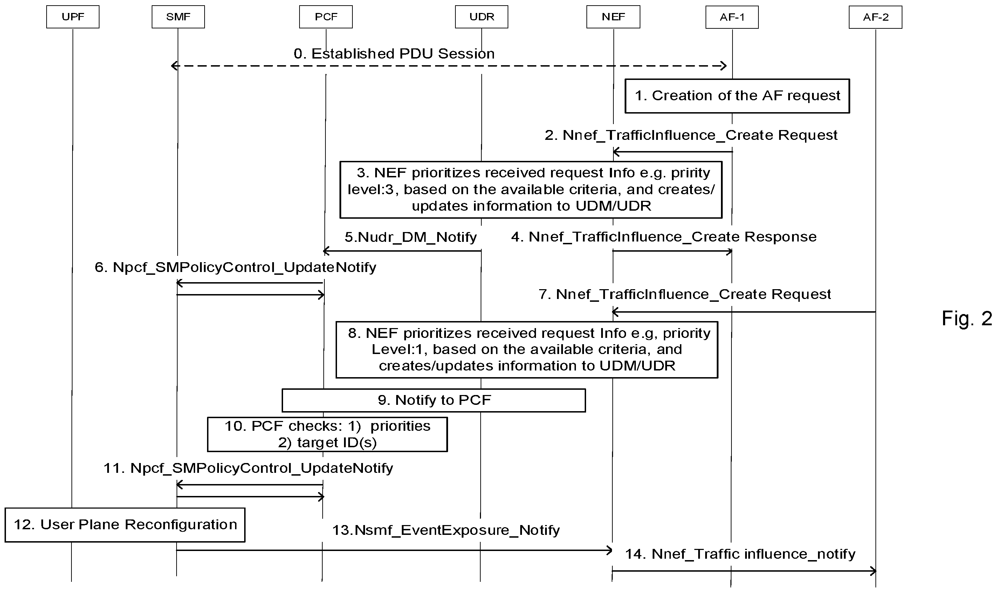

Hereinafter, some example arrangements are described at greater detail with reference to Figs. 1 and 2. Fig. 1 is related to a case that the AFs are owned by the network operator (or at least that the network operator trusts the AFs), while Fig. 2 is related to a case where the network operator does not trust the AFs (typically because they are not owned by the network operator).

As shown in Fig. 1, AF1 may provide traffic influence request information downstream to PCF via NEF. As an alternative option (not shown), AF1 may provide the traffic influence request information directly to PCF, in particular if it is related to a single UE. For example, the traffic influence request information may indicate"any UE" with anyUeInd (as defined in TABLE 1 clause 2) as target, triggering PCF to accordingly provide PCC rules to SMF. In addition, one or more AFs may provide traffic influence request information for a particular UE. The particular UE belongs to the anyUeInd.

Along with the traffic influence request information, the AFs provide a priority indication indicating a priority of the respective traffic influence request information. The priority indications enable PCF to accordingly consider the traffic influence request information as input information for PCC rule generation and further provide them downstream to SMF (or not).

An example of a potential usage of this priority information is as follows, wherein the targeted UEs are used as a parameter to determine the priority:
- A specific UE as target of traffic influence request information may be associated with highest priority or priority 1 (the highest priority)
- a group of UE as target of traffic influence request information may be associated with priority 3 (medium priority)
- any UE as target of traffic influence request information: may be associated with priority 5 (lower or lowest priority).
I.e., the higher the definiteness of the parameter used to determine the priority, the higher the priority of the traffic influence request information. Of course, depending on the needs, the relative priorities may be inverse to those of the above example.

Some example arrangements implement sub-priorities as well, for example in deployments where there are multiple AFs providing inputs to a particular UE.

Another example of priority determination is that an AF rule targets any traffic towards FQDN = *.application-providerX.com and another (more specialized) AF rule targets any traffic towards FQDN = *.game.application-providerX.com:
- The former rule may be associated with priority 3
- The latter rule may be associated with higher priority 2.

In this example, again, the higher the definiteness of the parameter used to determine the priority, the higher the priority of the traffic influence request information. Of course, depending on the needs, the relative priorities may be inverse to those of the above example.

While these examples are based on a single parameter, the AFs may use a set of plural parameters (e.g. a combination of the above mentioned parameters) to determine the priority.

As an example, AF1 and AF2 may provide rules which both apply to any UE and where DNAI1 and DNAI2 may apply in the same geographical area) :

| | |
|---|---|
| Rule 1: | traffic to an IP @ or FQDN range1 is to be sent to DNAI1 |
| Rule 2: | traffic to an IP @ or FQDN range2 is to be sent to DNAI2 |

PCF has to know which DNAI to use for traffic that maps both range1 and range2?

In this example, rule 1 may be sent to PCF (e.g. via NEF and UDR) by AF1 of the operator and the rule 2 may be sent to PCF (e.g. via NEF and UDR) by AF2 of a 3rd party with agreement with the operator (i.e., AF2 is a trusted AF, too).

The operator may decide to give Rule 1 the highest priority for a reduced set of users (all users with bronze subscription) and with a broader address range.

On the other hand, rule 2 might be split into rule 2' and rule 2".
- Rule 2' refers to any user (i.e., a larger set of users than those of prioritized Rule 1) but with a more precise address range 2' (those addresses corresponding to the apps of the 3rd party 2). This rule may have a medium priority.
- Rule 2" refers to any user (i.e., a larger set of users than those of prioritized Rule 1) but with a broader address range 2". This rule may have a lowest priority.

In some examples, Rules from AF2 may have higher priority (because the operator has a specific agreement with this 3rd party owning AF2) than specific Rule1 of the operator. On the other hand, the rules from the operator (Rule 1) may have a higher priority than rules from a 3rd party without an agreement with the operator.

The decision which of the received traffic influence request information has a higher priority (i.e., the comparison of the priorities) is met at PCF, based on the priority indications received from NEF (via UDR). Since the priority indications are available downstream from NEF regardless of whether the AFs are trusted or non-trusted, all the involved AFs may be trusted AFs (as shown in Fig. 1), or all the involved AFs may be non-trusted AFs (as shown in Fig. 2), or some of the involved AFs may be trusted AFs and some of the involved AFs may be non-trusted AFs.

The message flow in Fig. 1 is as follows:
Action 1: Application Function AF1 decides to send AF request, e.g. based on certain trigger conditions
Action 2: AF1 sends to 5GC via NEF, Nnef_TrafficInfluence_Create service operation. Along with all the information as specified in 3GPP 23.502 § 4.3.6, it additionally indicates the "priority level" which is stored in UDR together with the rule in action 3 and provided to the PCF in action 4 .
Actions 3-6: correspond to the actions described in 3GPP TS 23.502, § 4.3.6, wherein the priority indication is additionally provided / stored, as indicated above. Namely, in 3, the traffic influence request information and the priority indication are stored (or updated) in both NEF and UDR. In 4., NEF replies to AF1 with create_response, and in 5, UDR informs PCF on the traffic influence request information and the priority indication. In Fig. 1, it is assumed that the present message flow is the first traffic influence request information received by PCF. Therefore, it generates respective PCC rules and provides them to SMF for session handling (Action 6).
Action 7: Some time later, e.g. based on certain trigger conditions, AF-2 decides to provide traffic influence information to PCF via NEF, using service operation Nnef_TrafficInfluence_Create. An example of such a trigger may be due to UE mobility, i.e. UE is at a new location. Also, in the present example, AF-2 is not aware of AF-1 traffic influence request information earlier provided to 5GC. AF-2 sends traffic influence request information (e.g. Nnef_TrafficInfluence_Create including all the information as specified in 3GPP TS 23.502, § 4.3.6), and AF-2 additionally indicates the "priority level" for this information.
Action 8: same as the above Actions 3-5 .
Action 9: PCF thus received multiple rule information that targets the same traffic of the same PDU Session of a particular UE and needs to determine which rule to apply. This is particularly relevant if the rules are conflicting.

In this case, based on the priority indication, the PCF decides which rule to apply. If the later received traffic influence request information (i.e, the traffic influence request information from AF-2) has higher priority, PCF may replace the PCC rule provided to SMF by a PCC rule corresponding to the traffic influence request information received from AF2. If the traffic influence request information from AF-1 has the higher priority, PCF may either send the corresponding PCC rule again to SMF, or may not send any PCC rule to SMF.

Hereinafter, it is assumed that the traffic influence request information from AF-2 has the higher priority.

Action 10: corresponds to Action 6, with the PCC rule corresponding to the traffic influence request information from AF2.

Action 11 is not always needed. It corresponds to 3GPP TS 23.502, § 4.3.6. As the PCC rule has changed, SMF may have to do user plane reconfiguration, e.g. UPF/PSA relocation, change traffic routing for some UP flows and so on. It may also update (i.e. change) the URI of the AF to notification.

Actions 12-13: If the AF-2 had subscribed to user plane management event notifications, SMF sends, via NEF, a notification to the AF-2 (instead of notification to AF1, based on the received PCC rule which indicates new notification URI).

Fig. 2 shows another message flow according to some arrangements. This arrangement is specific to use cases where Application Function (AF) is deployed by a third party. In this case AF provides traffic influence request information (and receives notification) to 5GC via NEF.

In the example arrangements of Fig. 1, the priority of the traffic influence request information was set by the AFs. However, if the AF is third party deployed, AF based priority solution may not be sufficient (not acceptable for the network operator) because:
- AF, being a third party deployed, is not aware of operator determined rules to decide on the "priority level"
- Operator may not trust the priority level because the AF is third party deployed.

To address these problems, in some arrangements, NEF is enhanced with new functionality to handle incoming AF request to traffic influence. Thus, AF may send traffic influence request information as usual (e.g. as defined in 3GPP TS 23.502, clause 4.3.6), to 5GC via NEF. The AF may or may not send a priority indication along with the traffic influence request information. NEF, on receipt of AF request applies rules to determine the priority before forwarding the traffic influence request information and the priority indication to PCF (via UDM/UDR).

As another implementation, PCF may determine the priorities based on the same principles as explained further below for NEF. However, typically, implementing the determination of the priorities in the NEF is advantageous because the NEF anyhow has policies per external AF, e.g. to determine the target DNN, slice, traffic steering policy etc... of an AF request. This also allows to keep PCF unaware of whether it is an internal or external AF and avoids PCF to need to know information on AF business relationship (e.g. Service Level Agreement) that the NEF holds anyhow.

In some example implementations, PCF may receive some priorities from AF (via NEF and UDR) or NEF (via UDR) and determine some priorities itself.

As a still further option, NEF may determine not only the priorities of traffic influence request information from external AFs but also the priorities of traffic influence request information from operator-owned AFs.

Some example rules to determine the priority are explained. The operator may configure such rules. For example, NEF may apply lower priority to certain specific 3^{rd} party AFs w.r.t operator's deployed AFs. Alternatively or additionally, NEF (or PCF) may be configured to apply the following rule set to determine the priority of a traffic influence request information:
- A specific UE as target of the traffic influence request information is given highest priority or priority 1
- a group of UE as target of the traffic influence request information is given lower priority e.g. - priority 4
- anyUE as target of the traffic influence request information is given priority 5.
I.e., the higher the definiteness of the target, the higher the priority.

Fig. 2 shows a message flow for a case that an external AF (3rd party or non-trusted AF deployment) requests to influence traffic routing according to some example arrangements . In the example, the priorities are determined by NEF.

Action 1: Application Function AF1 decides to send AF request, e.g. based on certain trigger conditions.

Action 2: AF1 sends to 5GC via NEF, Nnef_TrafficInfluence_Create service operation with traffic influence request information, such as that specified by 3GPP TS 23.502, § 4.3.6.

Action 3: NEF, on receipt of the request from AF, applies specific rules, such as those explained above, to determine the priority of the traffic influence request information. Subsequently, NEF creates or updates corresponding information in the UDM/UDR together with the rules and provides them to PCF in step 5 .

Action 6 is the same as action 6 of Fig. 1. I.e., PCF provides PCC rules to SMF.

Action 7: Some time later, e.g. based on certain trigger conditions, AF-2 decides to provide traffic influence information to PCF via NEF, using service operation Nnef_TrafficInfluence_Create. An example of such a trigger may be due to UE mobility, i.e. UE is at a new location. Also, in the present example, AF-2 is not aware of AF-1 traffic influence request information earlier provided to 5GC.

Action 8: same as the above Action 3, with the specific rules applied to AF-2 request message.

Actions 9-14: Same as actions 8 to 13 in Fig. 1.

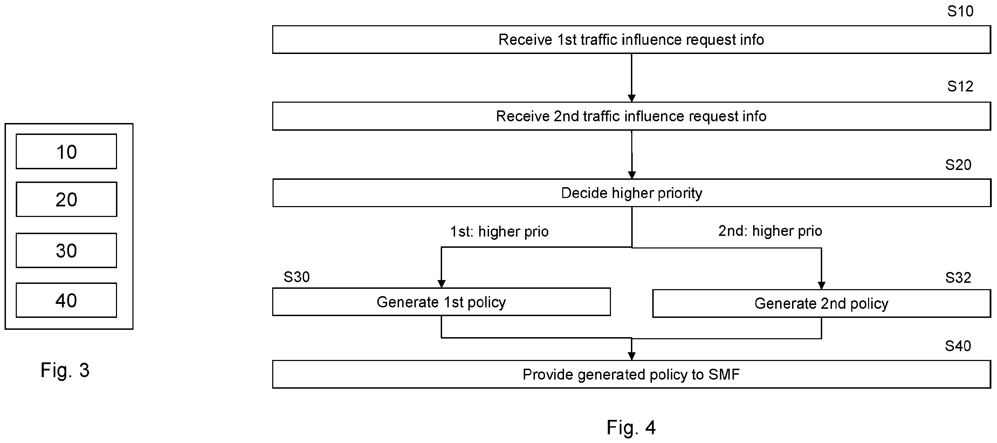

Fig. 3 shows an apparatus according to an example arrangement. The apparatus may be a policy control function or an element thereof. Fig. 4 shows a method according to an example arrangement. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises means for receiving 10, means for deciding, 20, means for generating 30, and means for providing 40. The means for receiving 10, means for deciding, 20, means for generating 30, and means for providing 40 may be a receiving means, deciding means, generating means, and providing means, respectively. The means for receiving 10, means for deciding, 20, means for generating 30, and means for providing 40 may be a receiver, decider, generator, and provider, respectively. The means for receiving 10, means for deciding, 20, means for generating 30, and means for providing 40 may be a receiving processor, deciding processor, generating processor, and providing processor, respectively.

The means for receiving 10 receives a first traffic influence request information related to a PDU session (S10). Furthermore, the means for receiving 10 receives a second traffic influence request information related to the PDU session (S12).

S10 and S12 may be performed in an arbitrary sequence. They may be performed fully or partly in parallel.

The means for deciding 20 decides, based on a first priority and a second priority , which of the first traffic influence request information and the second traffic influence request information has a higher priority (S20). The first priority is related to the first traffic influence request information. The second priority is related to the second traffic influence request information. For example, the first and second priorities may be received in first and second priority indications received along with the first and second traffic influence request information, respectively, or the apparatus may generate the first and second priorities.

If the means for deciding 20 decides that the first traffic influence request information has the higher priority, the means for generating 30 generates a first policy based on the first traffic influence request information (S30).

If the means for deciding 20 decides that the second traffic influence request information has the higher priority, the means for generating 30 generates a second policy based on the second traffic influence request information (S32).

The means for providing 40 provides the one of the first policy and the second policy generated by the means for generating 30 to a session management function associated to the PDU session (S40).

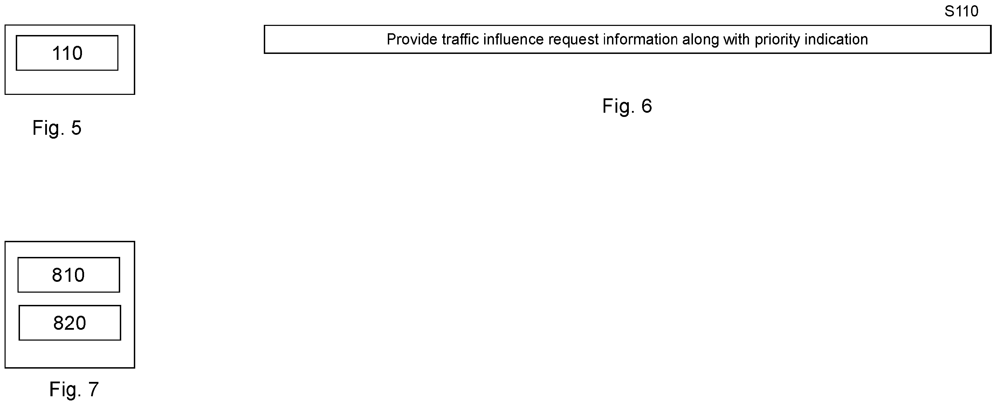

Fig. 5 shows an apparatus according to an examplearrangement. The apparatus may be a repository function such as a UDR or an element thereof, an exposure function such as a NEF or an element thereof, or an application function such as a AF or an element thereof. Fig. 6 shows a method according to an example arrangement. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for providing 110. The means for providing 110 may be a providing means. Means for providing 110 may be a provider. The means for providing 110 may be a providing processor.

The means for providing 110 provides a traffic influence request information related to a PDU session and a priority indication to a downstream network function (S110). The priority indication indicates a priority of the traffic influence request information. For example, a prioritized traffic influence request information may comprise both the traffic influence request information and the priority indication. If the apparatus is comprised in a UDR, the downstream network function may be a PCF. If the apparatus is comprised in a NEF, the downstream network function may be a UDR. If the apparatus is comprised in an AF, the downstream network function may be a NEF.

Fig. 7 shows an apparatus according to an arrangement. The apparatus comprises at least one processor 810, at least one memory 820 including computer program code, and the at least one processor 810, with the at least one memory 820 and the computer program code, being arranged to cause the apparatus to at least perform at least one of the methods according to Figs. 4 and 6 and related description.

Some example arrangementsare explained with respect to a 5G network. However, implementations may not be limited to 5G. It may be used in other networks, too, e.g. in previous or forthcoming generations of 3GPP networks such as 3G, 4G, 6G, 7G, etc.

The format of the traffic influence request information is not limited to that of Table 1. Any format suitable to provide information to influence at least one of traffic routing on a PDU session, notifications of the PDU session, and anchor selection of the PDU session may be selected.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that arrangements may provide, for example, a network function of core network, such as PCF, UDR, NEF, or AF, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered preferred implementations. However, it should be noted that the description of the preferred implementations is given by way of example only and that various modifications may be made without departing from the scope of the invention as defined by the appended claims.

## Claims

1. Policy control function (PCF) comprising:
one or more processors (810) and memory (820) storing instructions that, when executed by the one or more processors, cause the apparatus to perform:
receiving (S10), from a first application function (AF-1), a first traffic influence request information related to a protocol data unit session;
receiving (S12), from a second application function (AF-2), a second traffic influence request information related to the protocol data unit session;
wherein at least one of
first priority information is received along with the first traffic influence request information;
second priority information is received along with the second traffic influence request information
and wherein at least one of
the first traffic influence request information comprises an indication of the first priority; and
the second traffic influence request information comprises an indication of the second priority;
deciding (S20), based on the first priority and the second priority, which of the first traffic influence request information and the second traffic influence request information has a higher priority, wherein the first priority is related to the first traffic influence request information, and the second priority is related to the second traffic influence request information;
generating (S30) a first policy based on the first traffic influence request information if it is decided that the first traffic influence request information has the higher priority;
generating (S32) a second policy based on the second traffic influence request information if it is decided that the second traffic influence request information has the higher priority;
providing (S40) the generated one of the first policy and the second policy to a session management function associated to the protocol data unit session.

2. The policy control function according to claim 1, wherein the instructions, when executed by the one or more processors, further cause the apparatus to perform:
inhibiting the providing of the first policy if it is decided that the second traffic influence request information has the higher priority; and
inhibiting the providing of the second policy if it is decided that the first traffic influence request information has the higher priority.

3. The policy control function according to any of claims 1 to 2, wherein the instructions, when executed by the one or more processors, further cause the apparatus to perform:
checking if the first policy was provided to the session management function prior to receiving the second traffic influence request information or before the second priority became available;
checking if it is decided that the first traffic influence request information has a higher priority than the second traffic influence request information;
inhibiting the providing of the second policy if the first policy was provided to the session management function prior to receiving the second traffic influence request information or before the second priority became available and it is decided that the first traffic influence request information has the higher priority.

4. The policy control function according to any of claims 1 to 3, wherein each of the first traffic influence request information and the second traffic influence request information is adapted to influence at least one of traffic routing on the protocol data unit session, protocol data unit session anchor selection for the protocol data unit session, and a subscription to an event of the protocol data unit session.

5. A system comprising a policy control function according to any one of claims 1 to 4 and an application function (AF-1; AF-2) comprising:
one or more processors (810) and memory (820) storing instructions that, when executed by the one or more processors, cause the application function to perform:
providing (S110) a traffic influence request information related to one or more protocol data unit sessions and a priority indication to a policy control function according to any one of claims 1 to 4, wherein the priority indication indicates a priority of the traffic influence request information.

6. The system according to claim 5, wherein the instructions, when executed by the one or more processors, further cause the application function to perform:
determining the priority based on a parameter set comprising one or more parameters; and
generating the priority indication based on the determined priority.

7. The system according to claim 6, wherein one of the parameters of the parameter set is an element comprised in the traffic influence request information.

8. The system according to any of claims 6 and 7, wherein the instructions, when executed by the one or more processors, further cause the application function to perform:
generating the traffic influence request information.

9. The system according to claim 8, wherein one of the parameters in the parameter set is a traffic target of an application generating the traffic in the one or more protocol data unit sessions.

10. The system according to any of claim 7 and claims 8 to 9 if dependent on claim 7, wherein the element is an indication of a set of one or more user equipments to which the traffic influence request information is applicable.

11. The system according to any of claims 6 to 10, wherein at least one of
• one of the parameters in the parameter set defines whether an application function issuing the traffic influence request information is inside a network comprising the apparatus or external to the network;
• one of the parameters in the parameter set is an identity of the application function issuing the traffic influence request information
• one of the parameters in the parameter set is a particular area.

12. The system according to any of claim 6 to 11, wherein the priority is determined based on a level of definiteness of at least one of the parameters of the parameter set.

13. The system according to claim 12, wherein at least one of
the priority is determined such that the higher the definiteness of the at least one of the parameters is, the higher the priority of the traffic influence request information is; and
the priority is determined such that the higher the definiteness of the at least one of the parameters is, the lower the priority of the traffic influence request information is.

14. The system according to any of claims 5 to 13, wherein
the traffic influence request information is adapted to influence at least one of traffic routing on the one or more protocol data unit sessions, protocol data unit session anchor selection for the one or more protocol data unit sessions, and a subscription to an event of the one or more protocol data unit sessions.

15. The system according to any of claims 5 to 14, wherein the traffic influence request information comprises the priority indication.

16. Method comprising:
receiving (S10), by a policy control function (PCF) from a first application function (AF-1), a first traffic influence request information related to a protocol data unit session;
receiving (S12), by the policy control function from a second application function (AF-2), a second traffic influence request information related to the protocol data unit session;
wherein at least one of
first priority information is received along with the first traffic influence request information;
second priority information is received along with the second traffic influence request information;
and wherein at least one of
the first traffic influence request information comprises an indication of the first priority; and
the second traffic influence request information comprises an indication of the second priority;
deciding (S20), by the policy control function, based on a first priority and a second priority, which of the first traffic influence request information and the second traffic influence request information has a higher priority, wherein the first priority is related to the first traffic influence request information, and the second priority is related to the second traffic influence request information;
generating (S30), by the policy control function, a first policy based on the first traffic influence request information if it is decided that the first traffic influence request information has the higher priority;
generating (S32), by the policy control function, a second policy based on the second traffic influence request information if it is decided that the second traffic influence request information has the higher priority;
providing (S40), by the policy control function, the generated one of the first policy and the second policy to a session management function associated to the protocol data unit session.

17. The method of claim 16 further comprising:
providing (S110), by an application function (AF-1; AF-2), a traffic influence request information related to one or more protocol data unit sessions and a priority indication to a policy control function according to any one of claims 1 to 4, wherein the priority indication indicates a priority of the traffic influence request information.

## Patentansprüche

1. Richtliniensteuerfunktion (PCF), die Folgendes umfasst:
einen oder mehrere Prozessoren (810) und einen Speicher (820) zum Speichern von Anweisungen, die, wenn sie von dem einen oder den mehreren Prozessoren ausgeführt werden, die Vorrichtung veranlassen, Folgendes durchzuführen:
Empfangen (S10) von ersten Verkehrsbeeinflussungsanforderungsinformationen, die sich auf eine Protokolldateneinheitssitzung beziehen, von einer ersten Anwendungsfunktion (AF-1);
Empfangen (S12) von zweiten Verkehrsbeeinflussungsanforderungsinformationen, die sich auf die Protokolldateneinheitssitzung beziehen, von einer zweiten Anwendungsfunktion (AF-2);
wobei mindestens eines von Folgendem gilt
erste Prioritätsinformationen werden zusammen mit den ersten Verkehrsbeeinflussungsanforderungsinformationen empfangen;
zweite Prioritätsinformationen werden zusammen mit den zweiten Verkehrsbeeinflussungsanforderungsinformationen empfangen
und wobei mindestens eines von Folgendem gilt
die ersten Verkehrsbeeinflussungsanforderungsinformationen umfassen eine Anzeige der ersten Priorität; und
die zweiten Verkehrsbeeinflussungsanforderungsinformationen umfassen eine Anzeige der zweiten Priorität;
Entscheiden (S20) auf Basis der ersten Priorität und der zweiten Priorität, welche der ersten Verkehrsbeeinflussungsanforderungsinformationen und der zweiten Verkehrsbeeinflussungsanforderungsinformationen eine höhere Priorität aufweisen, wobei sich die erste Priorität auf die ersten Verkehrsbeeinflussungsanforderungsinformationen bezieht und sich die zweite Priorität auf die zweiten Verkehrsbeeinflussungsanforderungsinformationen bezieht;
Erzeugen (S30) einer ersten Richtlinie auf Basis der ersten Verkehrsbeeinflussungsanforderungsinformationen, wenn entschieden wird, dass die ersten Verkehrsbeeinflussungsanforderungsinformationen die höhere Priorität aufweisen;
Erzeugen (S32) einer zweiten Richtlinie auf Basis der zweiten Verkehrsbeeinflussungsanforderungsinformationen, wenn entschieden wird, dass die zweiten Verkehrsbeeinflussungsanforderungsinformationen die höhere Priorität aufweisen;
Bereitstellen (S40) der erzeugten der ersten Richtlinie und der zweiten Richtlinie für eine Sitzungsverwaltungsfunktion, die mit der Protokolldateneinheitssitzung verknüpft ist.

2. Richtliniensteuerfunktion nach Anspruch 1, wobei die Anweisungen, wenn sie von dem einen oder den mehreren Prozessoren ausgeführt werden, die Vorrichtung ferner veranlassen, Folgendes durchzuführen:
Unterbinden des Bereitstellens der ersten Richtlinie, wenn entschieden wird, dass die zweiten Verkehrsbeeinflussungsanforderungsinformationen die höhere Priorität aufweisen; und
Unterbinden des Bereitstellens der zweiten Richtlinie, wenn entschieden wird, dass die ersten Verkehrsbeeinflussungsanforderungsinformationen die höhere Priorität aufweisen.

3. Richtliniensteuerfunktion nach einem der Ansprüche 1 bis 2, wobei die Anweisungen, wenn sie von dem einen oder den mehreren Prozessoren ausgeführt werden, die Vorrichtung ferner veranlassen, Folgendes durchzuführen:
Prüfen, ob die erste Richtlinie der Sitzungsverwaltungsfunktion bereitgestellt wurde, bevor die zweiten Verkehrsbeeinflussungsanforderungsinformationen empfangen wurden oder bevor die zweite Priorität verfügbar wurde;
Prüfen, ob entschieden wurde, dass die ersten Verkehrsbeeinflussungsanforderungsinformationen eine höhere Priorität aufweisen als die zweiten Verkehrsbeeinflussungsanforderungsinformationen;
Unterbinden des Bereitstellens der zweiten Richtlinie, wenn die erste Richtlinie der Sitzungsverwaltungsfunktion bereitgestellt wurde, bevor die zweiten Verkehrsbeeinflussungsanforderungsinformationen empfangen wurden oder bevor die zweite Priorität verfügbar wurde, und entschieden wurde, dass die ersten Verkehrsbeeinflussungsanforderungsinformationen die höhere Priorität aufweisen.

4. Richtliniensteuerfunktion nach einem der Ansprüche 1 bis 3, wobei jede der ersten Verkehrsbeeinflussungsanforderungsinformationen und der zweiten Verkehrsbeeinflussungsanforderungsinformationen angepasst ist, mindestens eines einer Verkehrsleitung in der Protokolldateneinheitssitzung, einer Protokolldateneinheitssitzungsankerauswahl für die Protokolldateneinheitssitzung und einer Subskription eines Ereignisses der Protokolldateneinheitssitzung zu beeinflussen.

5. System, das eine Richtliniensteuerfunktion nach einem der Ansprüche 1 bis 4 und eine Anwendungsfunktion (AF-1; AF-2) sowie Folgendes umfasst:
einen oder mehrere Prozessoren (810) und einen Speicher (820) zum Speichern von Anweisungen, die, wenn sie von dem einen oder den mehreren Prozessoren ausgeführt werden, die Anwendungsfunktion veranlassen, Folgendes durchzuführen:
Bereitstellen (S110) von Verkehrsbeeinflussungsanforderungsinformationen, die sich auf eine oder mehrere Protokolldateneinheitssitzungen beziehen, und einer Prioritätsanzeige für eine Richtliniensteuerfunktion nach einem der Ansprüche 1 bis 4, wobei die Prioritätsanzeige eine Priorität der Verkehrsbeeinflussungsanforderungsinformationen anzeigt.

6. System nach Anspruch 5, wobei die Anweisungen, wenn sie von dem einen oder den mehreren Prozessoren ausgeführt werden, die Anwendungsfunktion ferner veranlassen, Folgendes durchzuführen:
Bestimmen der Priorität auf Basis eines Parametersatzes, der einen oder mehrere Parameter umfasst; und
Erzeugen der Prioritätsanzeige auf Basis der bestimmten Priorität.

7. System nach Anspruch 6, wobei einer der Parameter des Parametersatzes ein Element ist, das in den Verkehrsbeeinflussungsanforderungsinformationen umfasst ist.

8. System nach den Ansprüchen 6 und 7, wobei die Anweisungen, wenn sie von dem einen oder den mehreren Prozessoren ausgeführt werden, die Anwendungsfunktion ferner veranlassen, Folgendes durchzuführen:
Erzeugen der Verkehrsbeeinflussungsanforderungsinformationen.

9. System nach Anspruch 8, wobei einer der Parameter im Parametersatz ein Verkehrsziel einer Anwendung ist, die den Verkehr in der einen oder den mehreren Protokolldateneinheitssitzungen erzeugt.

10. System nach einem von Anspruch 7 und den Ansprüchen 8 bis 9, sofern von Anspruch 7 abhängig, wobei das Element eine Anzeige eines Satzes von einer oder mehreren Teilnehmereinrichtungen ist, für die die Verkehrsbeeinflussungsanforderungsinformationen gelten.

11. System nach einem der Ansprüche 6 bis 10, wobei mindestens eines von Folgendem gilt
• einer der Parameter im Parametersatz definiert, ob sich eine Anwendungsfunktion, die die Verkehrsbeeinflussungsanforderungsinformationen ausgibt, in einem Netzwerk, das die Vorrichtung umfasst, oder außerhalb des Netzwerks befindet;
• einer der Parameter im Parametersatz ist eine Identität der Anwendungsfunktion, die die Verkehrsbeeinflussungsanforderungsinformationen ausgibt
• einer der Parameter im Parametersatz ist ein bestimmter Bereich.

12. System nach einem der Ansprüche 6 bis 11, wobei die Priorität auf Basis eines Maßes einer Bestimmtheit von mindestens einem der Parameter des Parametersatzes bestimmt wird.

13. System nach Anspruch 12, wobei mindestens eines von Folgendem gilt
die Priorität wird derart bestimmt, dass je höher die Bestimmtheit des mindestens einen der Parameter ist, desto höher die Priorität der Verkehrsbeeinflussungsanforderungsinformationen ist; und
die Priorität wird derart bestimmt, dass je höher die Bestimmtheit des mindestens einen der Parameter ist, desto niedriger die Priorität der Verkehrsbeeinflussungsanforderungsinformationen ist.

14. System nach einem der Ansprüche 5 bis 13, wobei
die Verkehrsbeeinflussungsanforderungsinformationen sind angepasst, mindestens eines einer Verkehrsleitung in der einen oder den mehreren Protokolldateneinheitssitzungen, eine Protokolldateneinheitssitzungsankerauswahl für die eine oder die mehreren Protokolldateneinheitssitzungen, und eine Subskription eines Ereignisses der einen oder der mehreren Protokolldateneinheitssitzungen zu beeinflussen.

15. System nach einem der Ansprüche 5 bis 14, wobei die Verkehrsbeeinflussungsanforderungsinformationen die Prioritätsanzeige umfassen.

16. Verfahren, das Folgendes umfasst:
Empfangen (S10) von ersten Verkehrsbeeinflussungsanforderungsinformationen, die sich auf eine Protokolldateneinheitssitzung beziehen, durch eine Richtliniensteuerfunktion (PCF) von einer ersten Anwendungsfunktion (AF-1);
Empfangen (S12) von zweiten Verkehrsbeeinflussungsanforderungsinformationen, die sich auf die Protokolldateneinheitssitzung beziehen, durch die Richtliniensteuerfunktion von einer zweiten Anwendungsfunktion (AF-2);
wobei mindestens eines von Folgendem gilt
erste Prioritätsinformationen werden zusammen mit den ersten Verkehrsbeeinflussungsanforderungsinformationen empfangen;
zweite Prioritätsinformationen werden zusammen mit den zweiten Verkehrsbeeinflussungsanforderungsinformationen empfangen;
und wobei mindestens eines von Folgendem gilt
die ersten Verkehrsbeeinflussungsanforderungsinformationen umfassen eine Anzeige der ersten Priorität; und
die zweiten Verkehrsbeeinflussungsanforderungsinformationen umfassen eine Anzeige der zweiten Priorität;
Entscheiden (S20) auf Basis einer ersten Priorität und einer zweiten Priorität durch die Richtliniensteuerfunktion, welche der ersten Verkehrsbeeinflussungsanforderungsinformationen und der zweiten Verkehrsbeeinflussungsanforderungsinformationen eine höhere Priorität aufweisen, wobei sich die erste Priorität auf die ersten Verkehrsbeeinflussungsanforderungsinformationen bezieht und sich die zweite Priorität auf die zweiten Verkehrsbeeinflussungsanforderungsinformationen bezieht;
Erzeugen (S30) einer ersten Richtlinie durch die Richtliniensteuerfunktion auf Basis der ersten Verkehrsbeeinflussungsanforderungsinformationen, wenn entschieden wird, dass die ersten Verkehrsbeeinflussungsanforderungsinformationen die höhere Priorität aufweisen;
Erzeugen (S32) einer zweiten Richtlinie durch die Richtliniensteuerfunktion auf Basis der zweiten Verkehrsbeeinflussungsanforderungsinformationen, wenn entschieden wird, dass die zweiten Verkehrsbeeinflussungsanforderungsinformationen die höhere Priorität aufweisen;
Bereitstellen (S40) der erzeugten der ersten Richtlinie und der zweiten Richtlinie durch die Richtliniensteuerfunktion für eine Sitzungsverwaltungsfunktion, die mit der Protokolldateneinheitssitzung verknüpft ist.

17. Verfahren nach Anspruch 16, das ferner Folgendes umfasst:
Bereitstellen (S110) von Verkehrsbeeinflussungsanforderungsinformationen, die sich auf eine oder mehrere Protokolldateneinheitssitzungen beziehen, und einer Prioritätsanzeige für eine Richtliniensteuerfunktion nach einem der Ansprüche 1 bis 4, durch eine Anwendungsfunktion (AF-1; AF-2), wobei die Prioritätsanzeige eine Priorität der Verkehrsbeeinflussungsanforderungsinformationen anzeigt.

## Revendications

1. Fonction de contrôle de politique (PCF) comprenant :
un ou plusieurs processeurs (810) et une mémoire (820) stockant des instructions qui, lorsqu'elles sont exécutées par les un ou plusieurs processeurs, amènent l'appareil à réaliser ce qui suit :
recevoir (S10) d'une première fonction d'application (AF-1) des premières informations de demande d'influence de trafic liées à une session d'unité de données de protocole ;
recevoir (S12) d'une deuxième fonction d'application (AF-2) des deuxièmes informations de demande d'influence de trafic liées à la session d'unité de données de protocole ;
dans laquelle au moins l'un des cas suivants est vrai
des premières informations de priorité sont reçues avec les premières informations de demande d'influence de trafic ;
des deuxièmes informations de priorité sont reçues avec les deuxièmes informations de demande d'influence de trafic ;
et dans laquelle au moins l'un des cas suivants est vrai
les premières informations de demande d'influence de trafic comprennent une indication de la première priorité ; et
les deuxièmes informations de demande d'influence de trafic comprennent une indication de la deuxième priorité ;
sur la base de la première priorité et de la deuxième priorité, décider (S20) lesquelles parmi les premières informations de demande d'influence de trafic et les deuxièmes informations de demande d'influence de trafic ont une priorité plus élevée, dans laquelle la première priorité est liée aux premières informations de demande d'influence de trafic, et la deuxième priorité est liée aux deuxièmes informations de demande d'influence de trafic ;
générer (S30) une première politique sur la base des premières informations de demande d'influence de trafic s'il est décidé que les premières informations de demande d'influence de trafic ont la priorité plus élevée ;
générer (S32) une deuxième politique sur la base des deuxièmes informations de demande d'influence de trafic s'il est décidé que les deuxièmes informations de demande d'influence de trafic ont la priorité plus élevée ;
fournir (S40) celle générée parmi la première politique et la deuxième politique à une fonction de gestion de session associée à la session d'unité de données de protocole.

2. Fonction de contrôle de politique selon la revendication 1, dans laquelle les instructions, lorsqu'elles sont exécutées par les un ou plusieurs processeurs, amènent en outre l'appareil à réaliser ce qui suit :
inhiber la fourniture de la première politique s'il est décidé que les deuxièmes informations de demande d'influence de trafic ont la priorité plus élevée ; et
inhiber la fourniture de la deuxième politique s'il est décidé que les premières informations de demande d'influence de trafic ont la priorité plus élevée.

3. Fonction de contrôle de politique selon l'une des revendications 1 et 2, dans laquelle les instructions, lorsqu'elles sont exécutées par les un ou plusieurs processeurs, amènent en outre l'appareil à réaliser ce qui suit :
vérifier si la première politique a été fournie à la fonction de gestion de session avant la réception des deuxièmes informations de demande d'influence de trafic ou avant que la deuxième priorité ne devienne disponible ;
vérifier s'il est décidé que les premières informations de demande d'influence de trafic ont une priorité plus élevée que les deuxièmes informations de demande d'influence de trafic ;
inhiber la fourniture de la deuxième politique si la première politique a été fournie à la fonction de gestion de session avant la réception des deuxièmes informations de demande d'influence de trafic ou avant que la deuxième priorité ne devienne disponible et qu'il est décidé que les premières informations de demande d'influence de trafic ont la priorité plus élevée.

4. Fonction de contrôle de politique selon l'une des revendications 1 à 3, dans laquelle chacune parmi les premières informations de demande d'influence de trafic et les deuxièmes informations de demande d'influence de trafic sont adaptées pour influencer au moins un parmi un routage de trafic sur la session d'unité de données de protocole, une sélection d'ancrage de session d'unité de données de protocole pour la session d'unité de données de protocole, et un abonnement à un événement de la session d'unité de données de protocole.

5. Système comprenant une fonction de contrôle de politique selon l'une des revendications 1 à 4 et une fonction d'application (AF-1 ; AF-2) comprenant :
un ou plusieurs processeurs (810) et une mémoire (820) stockant des instructions qui, lorsqu'elles sont exécutées par les un ou plusieurs processeurs, amènent la fonction d'application à réaliser ce qui suit :
fournir (S110) des informations de demande d'influence de trafic liées à une ou plusieurs sessions d'unité de données de protocole et une indication de priorité à une fonction de contrôle de politique selon l'une des revendications 1 à 4, dans lequel l'indication de priorité indique une priorité des informations de demande d'influence de trafic.

6. Système selon la revendication 5, dans lequel les instructions, lorsqu'elles sont exécutées par les un ou plusieurs processeurs, amènent en outre la fonction d'application à réaliser ce qui suit :
déterminer la priorité sur la base d'un ensemble de paramètres comprenant un ou plusieurs paramètres ; et
générer l'indication de priorité sur la base de la priorité déterminée.

7. Système selon la revendication 6, dans lequel l'un des paramètres de l'ensemble de paramètres est un élément compris dans les informations de demande d'influence de trafic.

8. Système selon l'une des revendications 6 et 7, dans lequel les instructions, lorsqu'elles sont exécutées par les un ou plusieurs processeurs, amènent en outre la fonction d'application à réaliser ce qui suit :
générer les informations de demande d'influence de trafic.

9. Système selon la revendication 8, dans lequel l'un des paramètres de l'ensemble de paramètres est une cible de trafic d'une application générant le trafic dans les une ou plusieurs sessions d'unité de données de protocole.

10. Système selon l'une des revendications 7, et 8 et 9 si elles dépendent de la revendication 7, dans lequel l'élément est une indication d'un ensemble d'un ou plusieurs équipements utilisateurs auxquels les informations de demande d'influence de trafic sont applicables.

11. Système selon l'une des revendications 6 à 10, dans lequel au moins l'un des cas suivants est vrai
• l'un des paramètres de l'ensemble de paramètres définit si une fonction d'application émettant les informations de demande d'influence de trafic se trouve dans un réseau comprenant l'appareil ou si elle est externe au réseau ;
• l'un des paramètres de l'ensemble de paramètres est une identité de la fonction d'application émettant les informations de demande d'influence de trafic
• l'un des paramètres de l'ensemble de paramètres est une zone particulière.

12. Système selon l'une des revendications 6 à 11, dans lequel la priorité est déterminée sur la base d'un niveau de précision d'au moins un des paramètres de l'ensemble de paramètres.

13. Système selon la revendication 12, dans lequel au moins l'un des cas suivants est vrai
la priorité est déterminée de sorte que plus la précision de l'au moins un des paramètres est élevée, plus la priorité des informations de demande d'influence de trafic est élevée ; et
la priorité est déterminée de sorte que plus la précision de l'au moins un des paramètres est élevée, plus la priorité des informations de demande d'influence de trafic est faible.

14. Système selon l'une des revendications 5 à 13, dans lequel
les informations de demande d'influence de trafic sont adaptées pour influencer au moins un parmi un routage de trafic sur les une ou plusieurs sessions d'unité de données de protocole, une sélection d'ancrage de session d'unité de données de protocole pour les une ou plusieurs sessions d'unité de données de protocole, et un abonnement à un événement des une ou plusieurs sessions d'unité de données de protocole.

15. Système selon l'une des revendications 5 à 14, dans lequel les informations de demande d'influence de trafic comprennent l'indication de priorité.

16. Procédé comprenant les étapes suivantes :
recevoir (S10), par une fonction de contrôle de politique (PCF) d'une première fonction d'application (AF-1), des premières informations de demande d'influence de trafic liées à une session d'unité de données de protocole ;
recevoir (S12), par la fonction de contrôle de politique d'une deuxième fonction d'application (AF-2), des deuxièmes informations de demande d'influence de trafic liées à la session d'unité de données de protocole ;
dans lequel au moins l'un des cas suivants est vrai
des premières informations de priorité sont reçues avec les premières informations de demande d'influence de trafic ;
des deuxièmes informations de priorité sont reçues avec les deuxièmes informations de demande d'influence de trafic ;
et dans lequel au moins l'un des cas suivants est vrai
les premières informations de demande d'influence de trafic comprennent une indication de la première priorité ; et
les deuxièmes informations de demande d'influence de trafic comprennent une indication de la deuxième priorité ;
sur la base d'une première priorité et d'une deuxième priorité, décider (S20), par la fonction de contrôle de politique, lesquelles parmi les premières informations de demande d'influence de trafic et les deuxièmes informations de demande d'influence de trafic ont une priorité plus élevée, dans lequel la première priorité est liée aux premières informations de demande d'influence de trafic, et la deuxième priorité est liée aux deuxièmes informations de demande d'influence de trafic ;
générer (S30), par la fonction de contrôle de politique, une première politique sur la base des premières informations de demande d'influence de trafic s'il est décidé que les premières informations de demande d'influence de trafic ont la priorité plus élevée ;
générer (S32), par la fonction de contrôle de politique, une deuxième politique sur la base des deuxièmes informations de demande d'influence de trafic s'il est décidé que les deuxièmes informations de demande d'influence de trafic ont la priorité plus élevée ;
fournir (S40), par la fonction de contrôle de politique, celle générée parmi la première politique et la deuxième politique à une fonction de gestion de session associée à la session d'unité de données de protocole.

17. Procédé selon la revendication 16, comprenant en outre les étapes suivantes :
fournir (S110), par une fonction d'application (AF-1 ; AF-2), des informations de demande d'influence de trafic liées à une ou plusieurs sessions d'unité de données de protocole et une indication de priorité à une fonction de contrôle de politique selon l'une des revendications 1 à 4, dans lequel l'indication de priorité indique une priorité des informations de demande d'influence de trafic.
